# EUROPEAN PATENT APPLICATION

(11) **EP 1 574 531 A1**
(43) Date of publication of application: **14.09.2005**
(21) Application number: 02808256.8
(22) Date of filing: 18.12.2002
(51) Int. Cl.: C08F 226/06, G01N 31/00, G01N 21/78

(54) **METHOD OF DETERMINING TRACE METAL**

(71) Applicant: Kowa Co., Ltd., Aichi 460-8625 (JP)
(72) Inventor: ASANO, Takaharu, Tsukuba-shi, Ibaraki 305-0074 (JP); NAKAO, Hiroshi, Tsuchiura-Shi, Ibaraki 300-0813 (JP)
(74) Representative: Hartz, Nikolai
(86) International application number: PCT/JP2002/013224
(87) International publication number: WO 2004/055072

(57) **Abstract**

Provided are a method, upon radical copolymerization of a vinyl-containing porphyrin compound and a radically polymerizable monomer, thereby obtaining a porphyrin-nucleus introduced polymer, of controlling reactivity of the porphyrin-nucleus introduced polymer with a metal by selecting the radically polymerizable monomer; and a method for measuring a trace metal by measuring a change in absorbance caused by complex forming reaction between a porphyrin-nucleus introduced polymer, which has been obtained by radical copolymerization of a vinyl-containing porphyrin compound and a radically polymerizable monomer, and a heavy metal ion, said radically polymerizable monomer being selected so as to heighten reaction selectivity of the porphyrin-nucleus introduced polymer to a metal to be measured.

The present invention, by selecting the radically polymerizable monomer as a raw material for the porphyrin-neucleus introduced polymer as a measuring reagent, makes it possible to change the water-solubility or the reactivity of the measuring reagent with the metal in complex formation so that the target metal can be measured highly sensitively and easily.

## Description

### TECHNICAL FIELD

The present invention relates to a method for measuring the concentration of a trace metal contained in a sample by measuring a change in absorbance caused by the complex forming reaction between a specific porphyrin-nucleus introduced polymer and a metal ion. More specifically, the invention pertains to a method capable of conveniently measuring the concentrations of many heavy metals simultaneously.

### BACKGROUND ART

Heavy metals are classified as "industrial wastes requiring specific management" and they have their respective environmental quality standards. There is a demand for easy measurement of the concentration of each of various heavy metals existing in rivers, lakes, marshes, sewage or factory effluent. It is the common practice to employ atomic absorption spectrometry or inductively-coupled plasma emission spectrometry (ICP) for quantitatively determining heavy metals. These methods, however, are not usable for general purposes, because they involve problems such as high cost and necessity of pipe arrangement or exhaust system. On the other hand, the absorptiometry is not cost-effective and permits measurement through a relatively simple apparatus, but it is susceptible to many substances which exist in a sample but are not measuring objects so that pretreatment for removal of them is necessary.

Porphyrin compounds are colorimetric reagents used in absorption spectroscopy. To their porphyrin ring, several metals are bonded to form complexes. These metals are affected by, as well as an external factors such as pH, a substituent or functional group in the molecule of the porphyrin compounds.

As a colorimetric reagent, porphyrin compounds involve problems such as poor solubility in water. For improving their properties including water solubility or reactivity with metals, attempts have been made to substitute the reaction center, functional group in the vicinity thereof or side chain, bringing about great effects. In recent years, synthesis of water soluble porphyrins having various side chains has been reported (J. Amer. Chem. Soc., 94(1972)4511; J. Amer. Chem. Soc., 93(1971)3162; Inorg. Chem., 9(1970)1757; J. Amer. Chem. Soc., 91(1969)607; J. Heterocycl. Chem., 6(1969)927). There is also a report on the application of these porphyrins to analysis of metals contained at a trace level (ppb level) by making use of a change in fluorescence after formation of a complex with various metals (Analytica Chimica Acta, 74(1975)53-60; Bull. Chem. Soc. Japan, 1978, (5), 686-690; Bull. Chem. Soc. Japan, 1979, (5), 602-606; BUNSEKI KAGAKU vol. 25(1976)781; JP-A-1995-082285; JP-A-1980-054307).

Under the above-described techniques, however, it is necessary to substitute the side chain of a porphyrin ring in order to impart the porphyrin compound with water solubility or to change reactivity with a metal.

### DISCLOSURE OF THE INVENTION

An object of the present invention is therefore to provide a technique capable of imparting desired properties or reactivity to easily available porphyrin compounds without substitution, and to provide a highly sensitive method for measuring heavy metals by use of the technique.

With the foregoing in view, the present inventors have found that by performing radical copolymerization of a specific porphyrin compound having a vinyl monomer and a radically polymerizable monomer, thereby introducing the porphyrin nucleus into the principal chain of the polymer having various side chains. Upon copolymerization, by the selection of the proper polymer capable of radical polymerization, various porphyrin-nucleus introduced polymers different in the stereostructure are available without using a porphyrin derivative having various substituents and functional groups in the periphery of the porphyrin nucleus, and thus water-solubility and reactivity in the complex formation with a metal of the resultant porphyrin-nucleus introduced polymer can be changed. They have also found that highly sensitive measurement of a target metal can be attained easily by the use of the above-described polymer as a measuring reagent. As a result, they have completed the present invention.

In one aspect of the present invention, there is thus provided a method of controlling the reactivity of the porphyrin-nucleus introduced polymer with a metal, upon radical copolymerization of a vinyl-containing porphyrin compound and a radically polymerizable monomer, by selecting the radically polymerizable monomer.

In another aspect of the present invention, there is also provided a trace metal measuring method by measuring a change in absorbance caused by complex forming reaction between a porphyrin-nucleus introduced polymer, which has been obtained by radical copolymerization of a vinyl-containing porphyrin compound and a radically polymerizable monomer, and a heavy metal ion, said radically polymerizable monomer being selected so as to heighten reaction selectivity of the porphyrin-nucleus introduced polymer to the target metal.

### BRIEF DESCRIPTION OF DRAWINGS

FIG. 1 a-g illustrates a difference in the absorbance caused by the addition of a metal salt to the copolymer of TAPP and methacrylic acid (pH 5.5);
FIG. 2 a-g illustrates a difference in the absorbance caused by the addition of a metal salt to the copolymer of TAPP and methacrylic acid (pH 11);
FIG. 3 a-g illustrates a difference in the absorbance caused by the addition of a metal salt to the copolymer of PPDE and acrylamide (pH 11);
FIG. 4 a-g illustrates a difference in the absorbance caused by the addition of a metal salt to the copolymer of PPDE and methacrylic acid (pH 11);
FIG. 5 illustrates reaction curves of (a)TAPP-MAcid with Cu²⁺ at pH 5.5, (b)PPDE-AAm and Zn²⁺ at pH 5.5 and (c)PPDE-AAm with Pb²⁺ at pH 11; and
FIG. 6 a-g illustrate a difference in the absorbance of the gel obtained by the immersion of the copolymerization gel of PPDE, acrylamide and N,N-methylenebisacrylamide into an aqueous metallic salt solution.

### BEST MODE FOR CARRING OUT THE INVENTION

Although no particular limitation is imposed on the vinyl-containing porphyrin compound to be used in the present invention, those represented by the following formulas (1) to (5) can be employed. 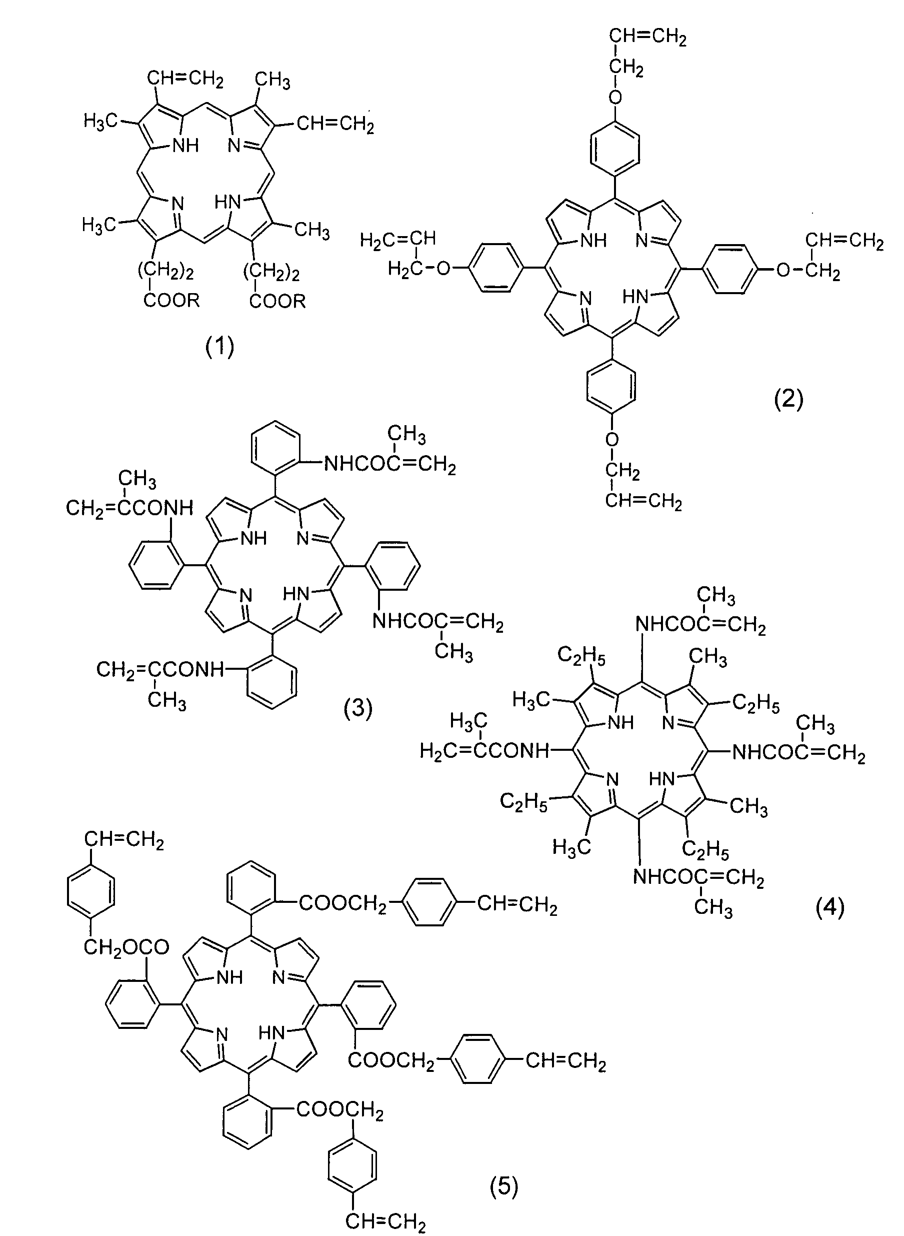 wherein, R represents a hydrogen atom or a C₁₋₆ alkyl group.

Among them, preferred ones include protoporphyrin IX (hereinafter be abbreviated as "PPfacid") of the formula (1) wherein R represents H, protoporphyrin IX dimethyl ester of the formula (1) wherein R represents a methyl group (hereinafter be abbreviated as "PPDE"), and 5,10,15,20-tetrakis[4-(allyloxy)phenyl]-21H,23H-porphyrin of the formula (2) (hereinafter be abbreviated as "TAPP"). These porphyrin compounds are commercially available or can be synthesized by converting the functional group of the commercially available product.

Although no particular limitation is imposed on the radically polymerizable monomer to be used in the present invention, usable are, for example, the following compound (6): 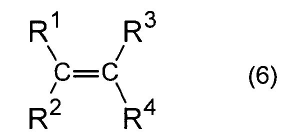 wherein R¹, R², R³ and R⁴ each independently represents a hydrogen atom, a C₁₋₅ alkyl group, -(CH₂)ₙCOOR⁵, -(CH₂)ₙOCOR⁵, - (CH₂)ₙN (R⁵) (R⁶), - (CH₂)ₙCON (R⁵) (R⁶), - (CH₂)ₙA (in which R⁵ and R⁶ each represents a hydrogen atom, a C₁₋₅ alkyl group, a carboxymethyl group, or a phenyl or phenylalkyl group which may have a substituent, A represents a halogen atom, a hydroxy group, a formyl group, a cyano group or a carbonyl halide group, and n stands for an integer of 0 to 6), or an imidazolyl, pyridyl or phenyl group which may have a substituent.

Specific examples include acrylamide, methacrylic acid, acrylic acid, 5-hexenoic acid, allylamine, 3-butenoic acid, β-methallyl alcohol, allyl alcohol, N,N-dimethylacrylamide, 1-vinylimidazole, 2-vinylpyridine, 4-vinylpyridine, allyl chloride, vinyl acetate, maleamide, maleic acid, dimethyl maleate, diethyl maleate, maleinamic acid, methyl hydrogen maleate, ethyl hydrogen maleate, fumaramide, fumaric acid, dimethyl fumarate, diethyl fumarate, ethyl hydrogen famarate, fumaronitrile, fumaryl chloride, crotonamide, crotonic acid, crotonaldehyde, methyl crotonate, ethyl crotonate, crotononitrile, crotonoyl bromide, crotonoyl chloride, crotyl alcohol, crotyl bromide, crotyl chloride, isocrotonic acid, trans-1,2-dichloroethylene, citraconic acid, dimethyl citraconate, mesaconic acid, angelic acid, methyl angelate, tiglic acid, methyl tiglate, ethyl tiglate, tigloyl chloride, tiglic aldehyde, N-tigloylglycine, cinnamaldehyde, cinnamamide, cinnamic acid, ethyl cinnamate, methyl cinnamate, cinnamonitrile, cinnamoyl chloride, cinnamyl bromide, cinnamyl chloride, 3-methyl-2-butenol, 2-methyl-2-butene, 2-methyl-2-butenenitrile, 3-methyl-2-buten-1-ol, and cis-1,2-dichloroethylene.

By using, as the radically polymerizable monomer, the above-described compound having one polymerizable carbon-carbon double bond and a compound having at least two polymerizable carbon-carbon double bonds and serving as a crosslinking agent in combination, polymers having various performances such as a polymer gel which has grown three-dimensionally are available. As such a radically polymerizable monomer having at least two polymerizable carbon-carbon double bonds, compounds represented by the following formula (7): 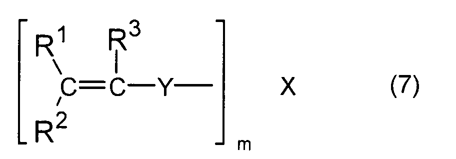 wherein R¹, R² and R³ have the same meanings as described above, Y is a single bond, -(CH₂)ₙCOO-, -(CH₂)ₙOCO-, -(CH₂)ₙNR⁵,
-(CH₂)ₙCONR⁵-, -(CH₂)ₙO-, or -(CH₂)ₙCO- (in which R⁵ and n have the same meaning as described above), X is -(CH₂)ₙ-,
-(CH₂)ₙS-S(CH₂)ₙ-, [-(CH₂)ₙ-]₃CR⁵, [-(CH₂)ₙ-]₄C, -ϕ-, or -ϕ< (in which R⁵ and n have the same meaning as described above, ϕ is a benzene ring), m stands for an integer of 2 to 4 can be given as examples.

Specific examples of such a crosslinking agent include the following compounds.

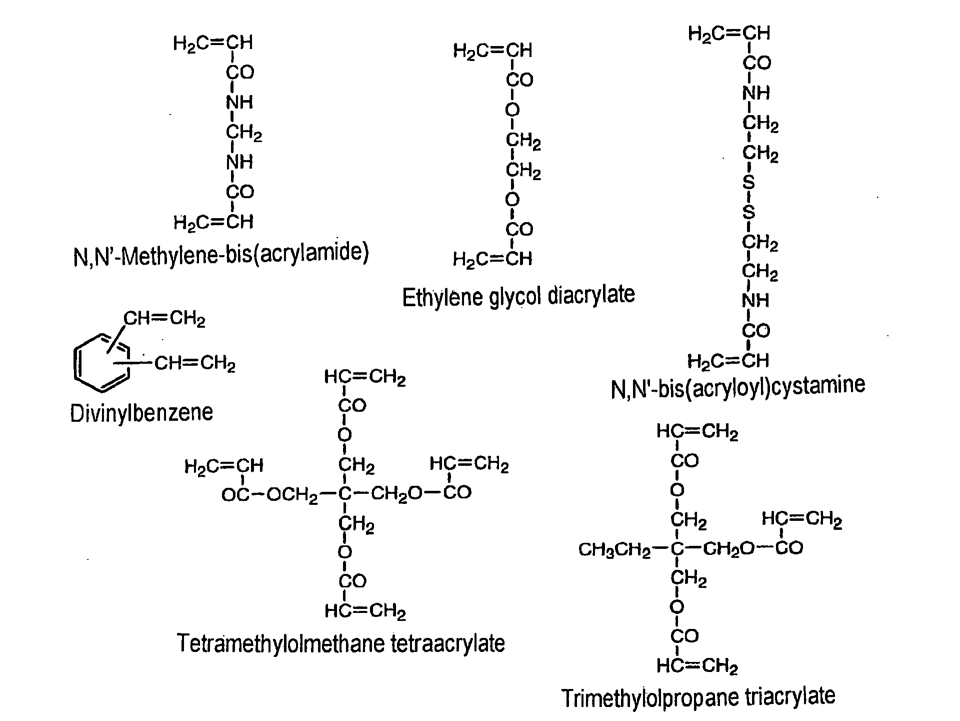

A weight ratio of the porphyrin compound to the radically polymerizable monomer in the present invention preferably ranges from 1:100 to 1:10,000, with 1:200 to 1:1,000 being more preferred.

There is no particular limitation imposed on the molecular weight of the porphyrin-nucleus introduced polymer obtained by radical copolymerization of a porphyrin compound and a radically polymerizable monomer. If it is used as a measuring reagent, the resulting polymer preferably has a weight average molecular weight, as measured by the light scattering method, ranging from 50,000 to 5,000,000, with 100,000 to 1,000,000 being more preferred.

The radical copolymerization of the porphyrin compound and radically polymerizable monomer is effected in an organic solvent in the presence of a polymerization initiator. Examples of the organic solvent include dimethylsulfoxide (DMSO), tetrahydrofuran (THF), benzene, chloroform and dimethylformamide (DMF). In particular, DMSO is suited when PPfacid or PPDE is used as the porphyrin compound, while THF is suited when TAPP is used. As the polymerization initiator, azobisisobutyronitrile (AIBN) and 2,2'-azobis(4-methoxy-2,4-dimethylvalelonitrile) can be given as examples.

The reaction is preferably carried out for 5 to 30 hours, more preferably 15 to 25 hours at 30 to 80°C, more preferably 55 to 65°C. After completion of the reaction, the reaction mixture may be dialyzed for isolation and washing.

The porphyrin-nucleus introduced polymers of the present invention thus obtained differ in reactivity with a metal, depending on the kind of the radically polymerizable monomer added upon radical copolymerization. When the porphyrin-nucleus introduced polymers of the invention are used as a trace metal measuring reagent, highly sensitive and convenient measurement can be attained by using a polymer having high selectivity to a metal to be measured and measuring a change in absorbance caused by complex formation with a heavy metal ion. Use in combination of two or more polymers different in reaction selectivity to metals enables simultaneous measurement of plural metals. When a compound having at least two vinylene groups is used as the radically polymerizable monomer as described above, the mixture grows three dimensionally into a polymer (gel) in various forms such as sheet, film, tube, beads and paste, making it possible to adapt it to a variety of measuring conditions.

A trace metal in a sample can be measured, for example, by adding a porphyrin-nucleus introduced polymer to a buffer solution, measuring absorbance of the resulting mixture by a spectrophotometer, adding the sample containing the trace metal, measuring absorbance again after a lapse of a predetermined time and deriving a metal concentration from the difference in absorbance based on the regression equation or calibration curve built by multiple regression analysis using the value of a standard sample.

When the porphyrin-nucleus introduced polymers of the invention are used as a trace metal measuring reagent, examples of the heavy metal ion to be measured include Ca²⁺, Cd²⁺, Co²⁺, Cr³⁺, Cu²⁺, Fe³⁺, Fe²⁺, Mg²⁺, Mn²⁺, Ni²⁺, Zn²⁺ and Pb²⁺. This reagent is applicable to measurement of any samples taken from rivers, lakes, marshes, sewage, factory effluent, leachate from waste incinerators and the like which need control by environmental quality standards.

### Examples

The present invention will hereinafter be described in further detail by the following examples. It should however be borne in mind that the present invention is not limited to or by them. Example 1 Synthesis of a porphyrin-nucleus introduced polymer

As the porphyrin compound, PPfacid, PPDE and TAPP were employed, while as the radically polymerizable monomer, the below-described 13 compounds were employed among the above-exemplified ones (the abbreviation in parentheses will hereinafter be used).

| | |
|---|---|
| Acrylamide (AAm) | Methacrylic acid (MAcid) |
| Acrylic acid (AAcid) | 5-Hexenoic acid (5HAcid) |
| Allylamine (AAmine) | 3-Butenoic acid (3BAcid) |
| β-Methallyl alcohol (βMA1) | Allyl alcohol (AAl) |
| N,N-dimethylacrylamide (DMAAm) | 1-vinylimidazole (1VImida) |
| 4-Vinylpyridine (4VPyr) | Allyl chloride (AChlo) |
| Vinyl acetate (VAce) | |

In a vessel, 10 ml of a 0.6 mM porphyrin solution, an adequate amount of a radically polymerizable monomer and 0.4 ml of 500 mM AIBN were charged, followed by the addition of an organic solvent to give the total amount of 20 ml. The radically polymerizable monomer was added so that the concentration after filling would become 1M. As the solvent, DMSO was used for the synthesis of a PPfacid- or PPDE-introduced polymer, while THF was used for the synthesis of a TAPP-introduced polymer.

The vessel having the reaction mixture therein was immersed in cold water filled in an ultrasonic cleaner, followed by degassing for 30 minutes. Rightly after bubbling by a nitrogen gas for 2 minutes, the vessel was hermetically sealed. It was placed in an incubator of 60°C and polymerization was initiated. After 21 hours, the polymer solution was encapsulated in a dialysis membrane (molecular cutoff: 12000 to 14000) for isolation and washing of the polymer and dialyzed against miliQ water in a room at low temperature (4°C). The polymer insoluble in water precipitated or produced turbidity so that it was dissolved in methanol. In the end, the insoluble matter was removed by filtration through a 0.2 µm filter, whereby solutions of various porphyrin-nucleus introduced polymers were prepared.

Table 1 shows the results of infrared spectroscopic analysis, melting-point measurement and molecular-weight measurement (weight-average molecular weight as measured by light scattering method) of each of the porphyrin-nucleus introduced polymers thus prepared.

**Table 1**

| Polymer | Average Mw | IR Absorp. peak (cm⁻¹) | Group | mp(°C) |
|---|---|---|---|---|
| PPDE-AAm | 276100 | 1655 | -CONH₂ | 249-279 |
| PPDE-MAcid | 290700 | 1701 | -COOH | 240-261 |
| | | 1261 | | |
| PPDE-AAcid | | 1720 | -COOH | - |
| | | 1248 | | |
| PPDE-1VImida | | | | |
| | | 1601 | | |
| PPDE-4VPyr | | 1420 | Pyridine ring | 168-255 |
| | | 824 | | |
| PPDE-5HAcid | | | | |
| PPDE-3BAcid | | | | |
| PPDE-VAce | | 1736 | -CO-O- | 78-126 |
| | | 1240 | | |
| PPDE-AAmine | | | | |
| PPDE-AChlo | | 689 | C-Cl | |
| PPDE-AAl | | 1067 | C-O stretching vibration | |
| PPDE-βMAl | | 1055 | C-O stretching vibration | |
| PPDE-DMAAm | | 1624 | -CO-N tertiary amide | |
| PPfacid-AAm | | 1655 | -CONH₂ | |
| TAPP-AAm | | 1655 | -CONH₂ | 198-246 |
| TAPP-MAcid | 563700 | 1701 | -COOH | 239-244 |
| | | 1263 | | |
| TAPP-AAcid | | 1720 | -COOH | - |
| | | 1244 | | |
| TAPP-DMAAm | | 1618 | -CO-N tertiary amide | |

### Example 2 Measurement of reactivity with metal

### (1) Measuring method

To 200 µl of a buffer solution, the porphyrin introduced polymer solution and a diluent were added to give the total amount of 1 ml. As the buffer solution, 100 mM 2-(N-morpholino)ethanesulfonic acid (MES) of pH 5.5 and 100 mM 3-cyclohexylamino-1-propanesulfonic acid (CAPS) of pH 11 were employed, respectively. As the diluent, miliQ water was used for a water soluble polymer, while methanol was used for another polymer. A ratio of the diluent to the polymer solution was adjusted so that the maximum absorbance would become about 1.

By a spectrophotometer, absorbance at 370 to 500 nm was measured with miliQ water or methanol as a blank. Then, 10 µl of a 200 µM aqueous metal salt solution as shown in Table 2 was added. After 15 minutes at 80°C, absorbance was measured again in a similar manner. At this time, a volumetric change due to addition of the metal was considered to be negligible.

**Table 2**

| Metal salt | Metal ion |
|---|---|
| Calcium chloride | Ca²⁺ |
| Cadmium chloride | Cd²⁺ |
| Cobalt chloride | Co²⁺ |
| Chromium (III) chloride | Cr³⁺ |
| Copper sulfate | Cu²⁺ |
| Iron (III) chloride | Fe³⁺ |
| Iron (II) chloride | Fe²⁺ |
| Magnesium chloride | Mg²⁺ |
| Manganese chloride | Mn²⁺ |
| Nickel chloride | Ni²⁺ |
| Zinc sulfate | Zn²⁺ |
| Lead nitrate | Pb²⁺ |

### (2) Results

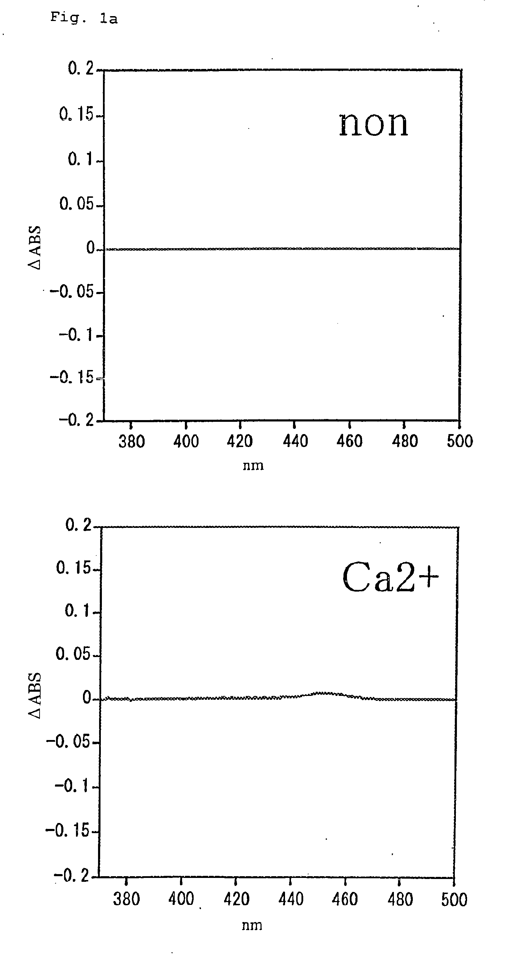

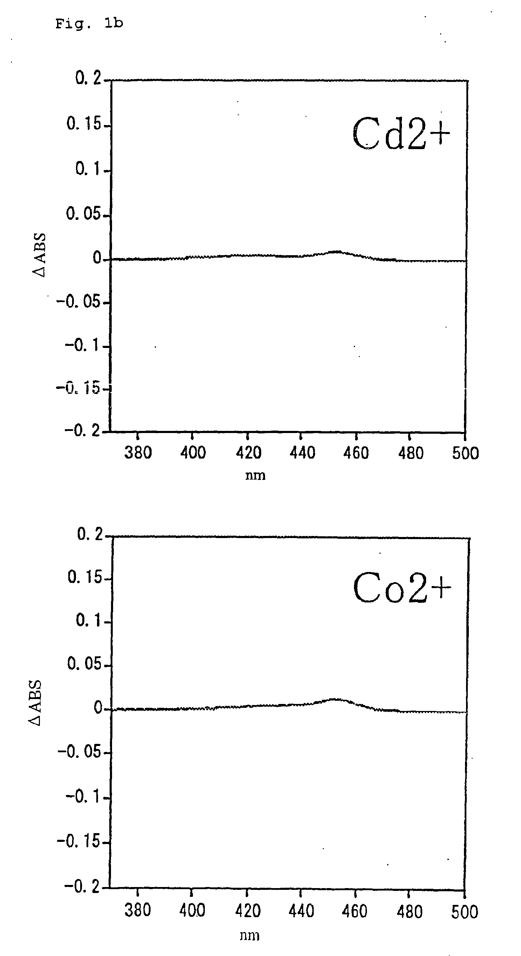

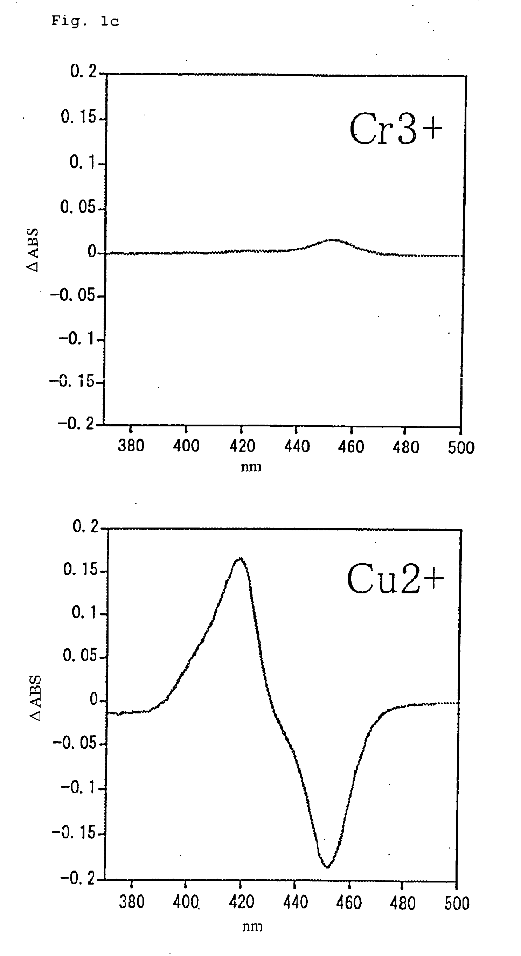

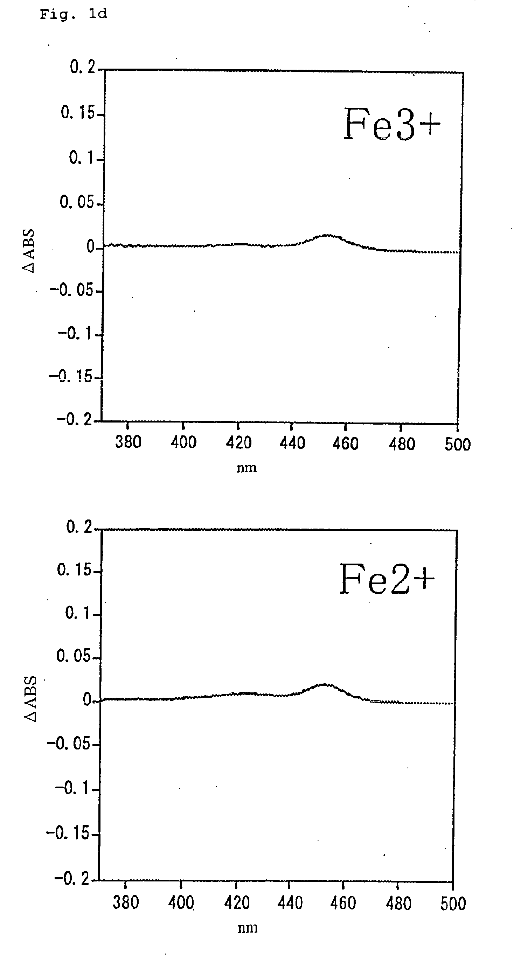

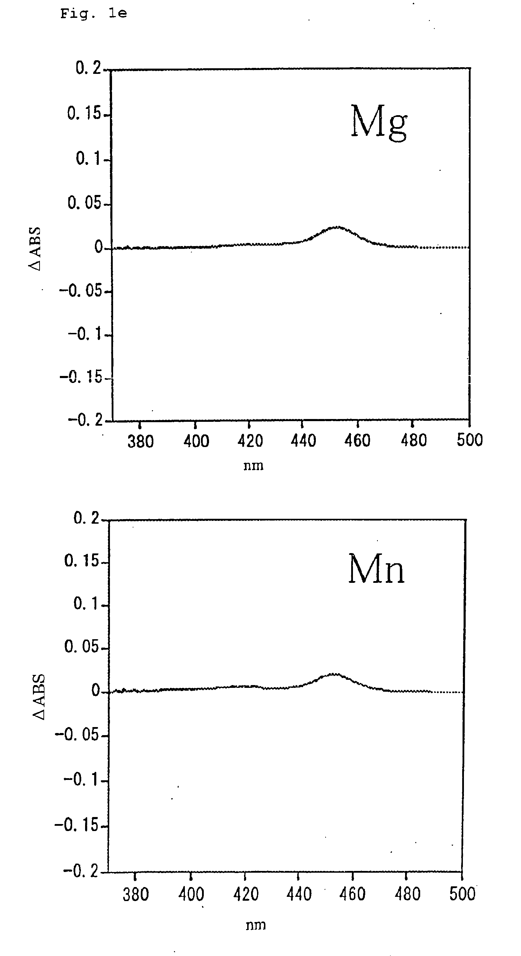

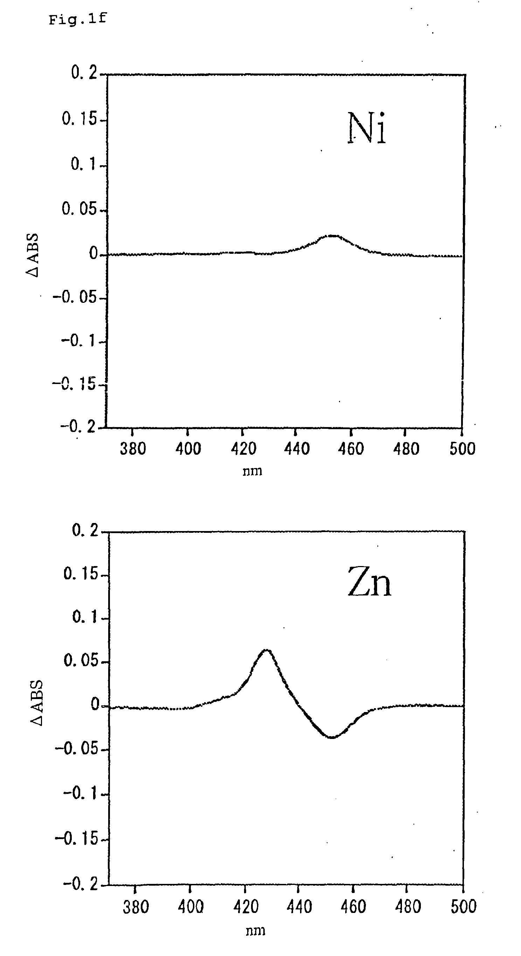

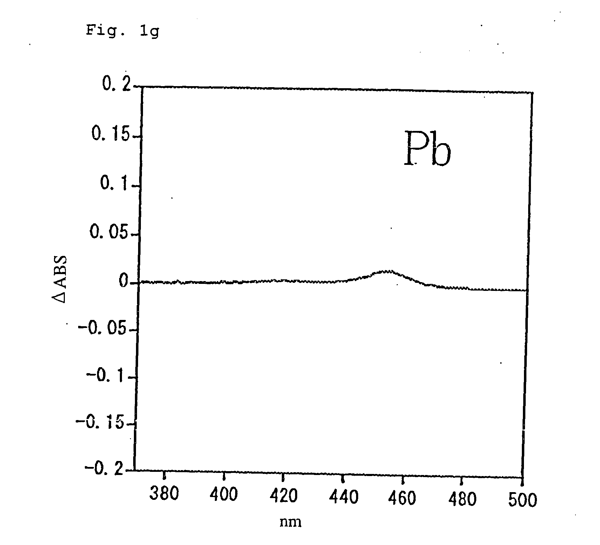

i) Differences in the absorbance caused by the addition of metal salts at pH 5.5 or pH 11 are shown in FIGS. 1 to 4.

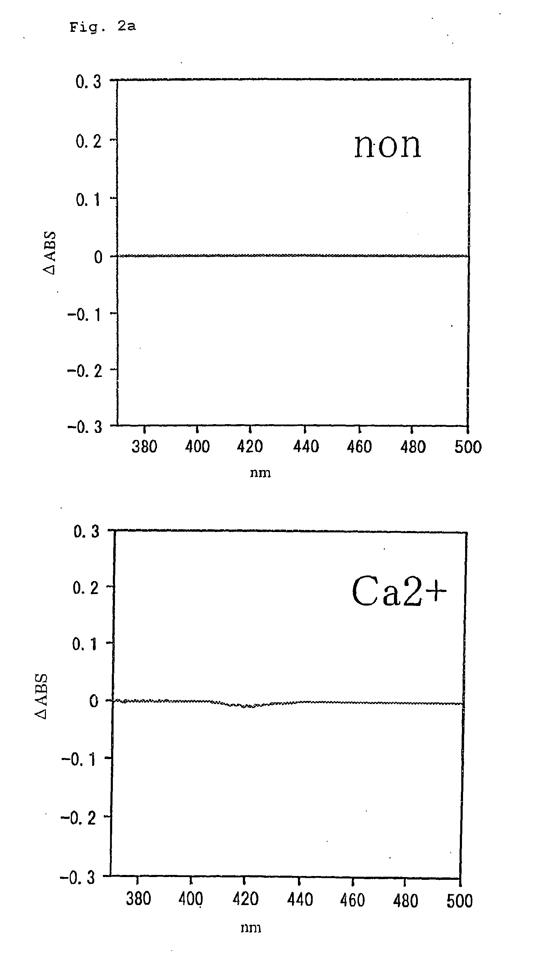

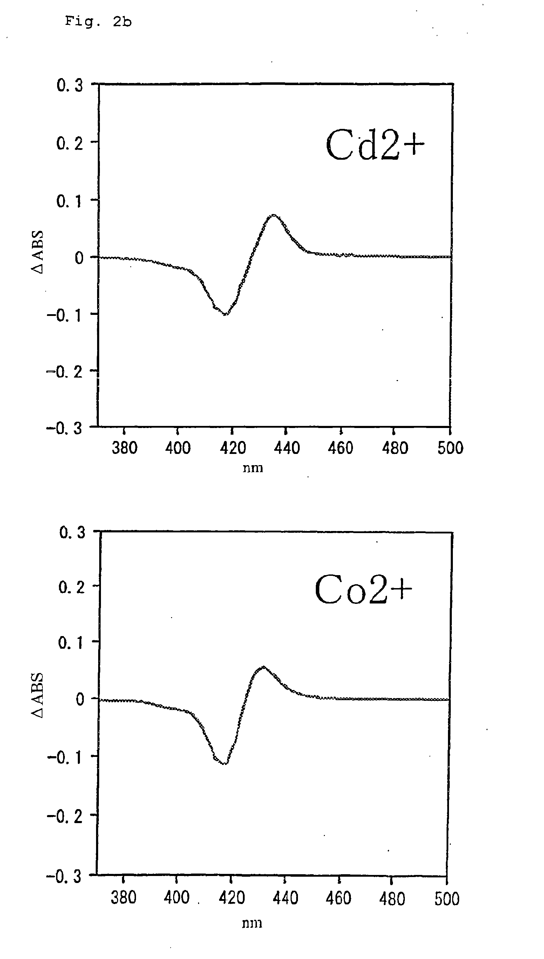

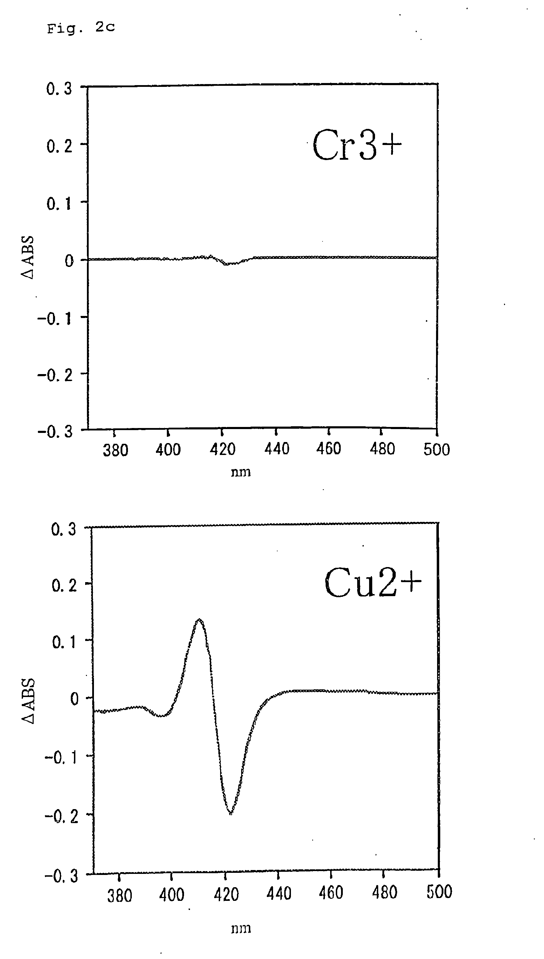

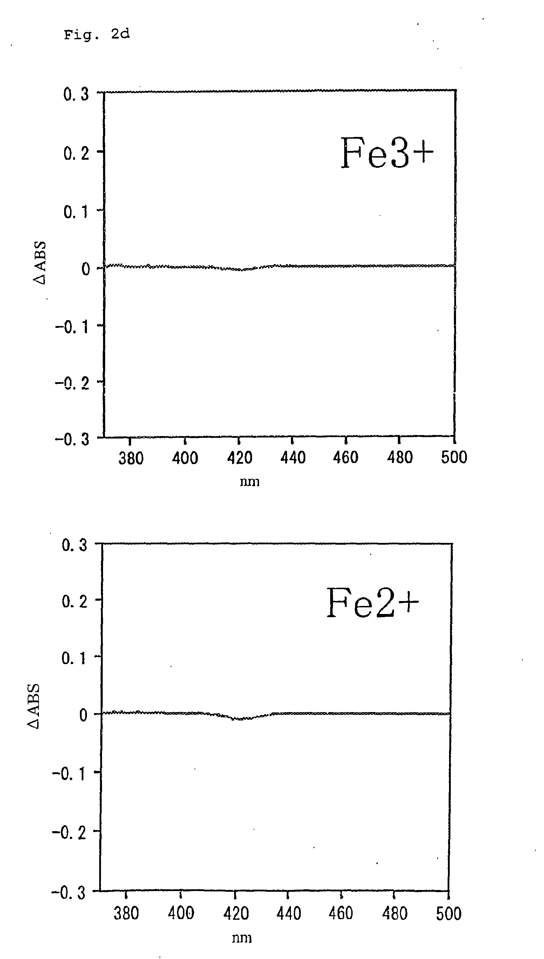

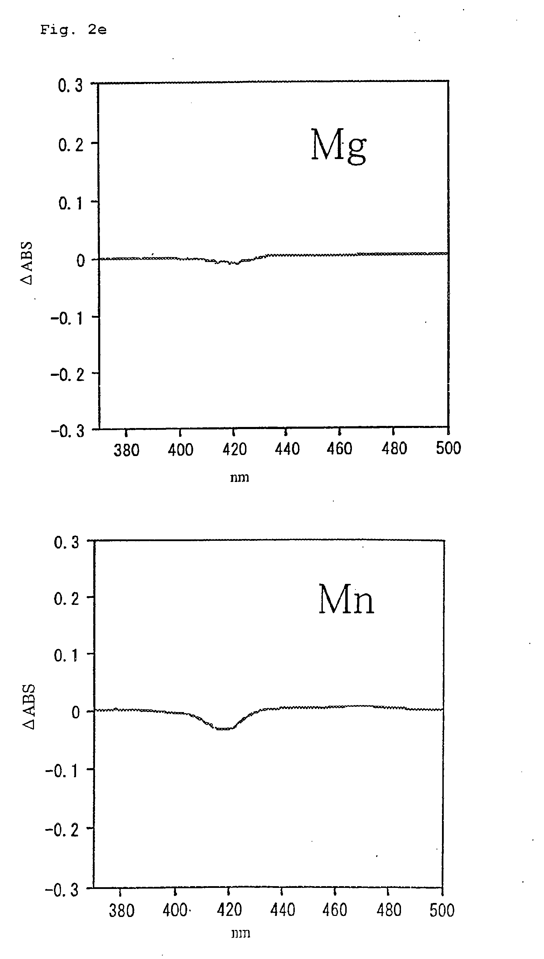

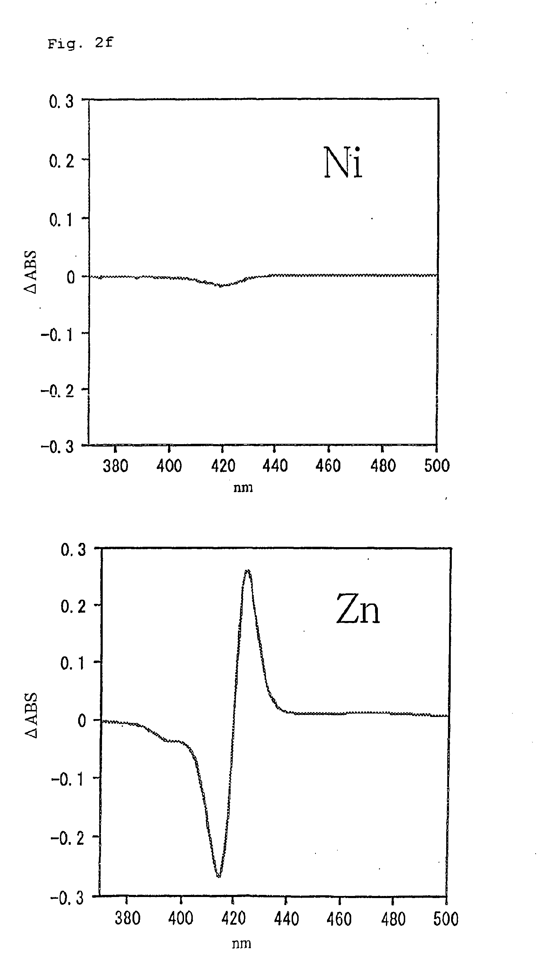

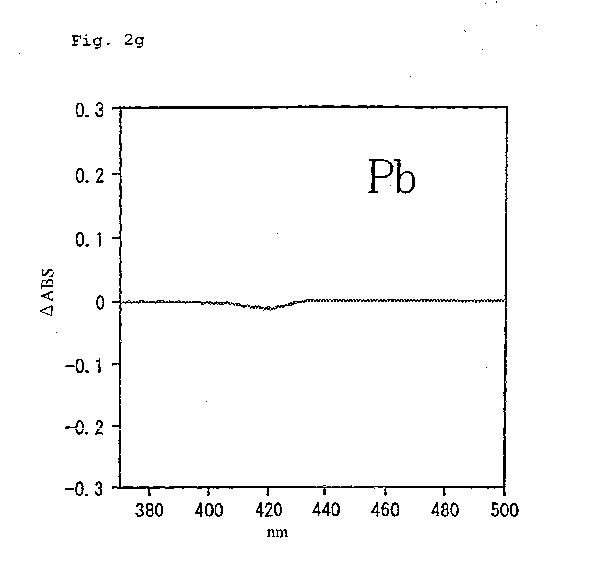

FIG. 1 a-g show a difference in the absorbance of a TAPP - methacrylic acid copolymer (TAPP-MAcid) at pH 5.5; and FIG. 2 a-g show a difference in the absorbance of TAPP-MAcid at pH 11. Metals causing a large absorbance difference were Cu²⁺ and Zn²⁺ at pH 5.5, and Cu²⁺, Zn²⁺, Cd²⁺, and Co²⁺ at pH 11.

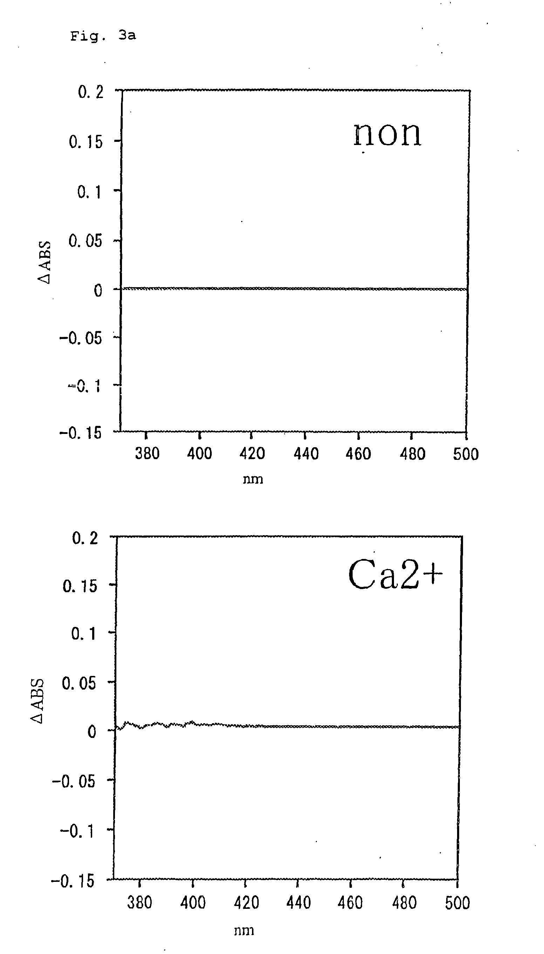

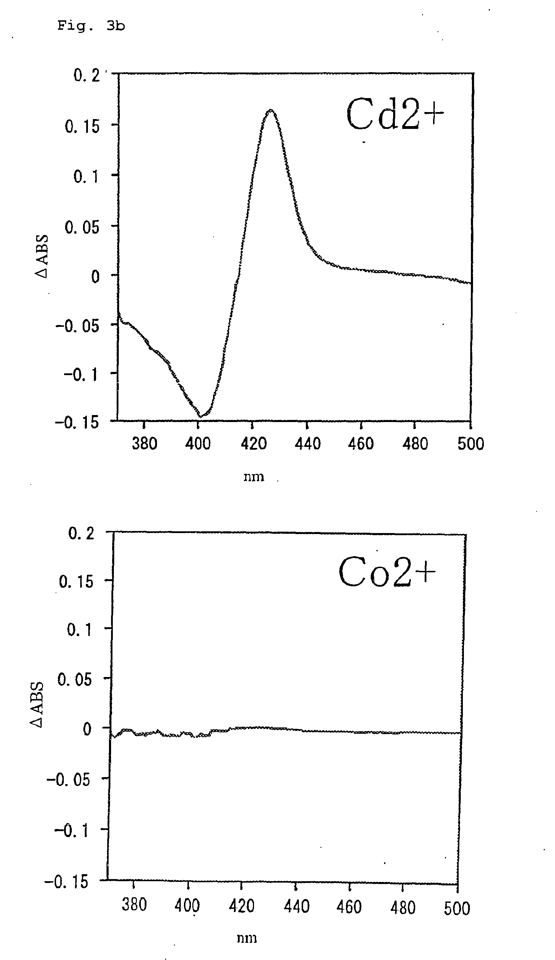

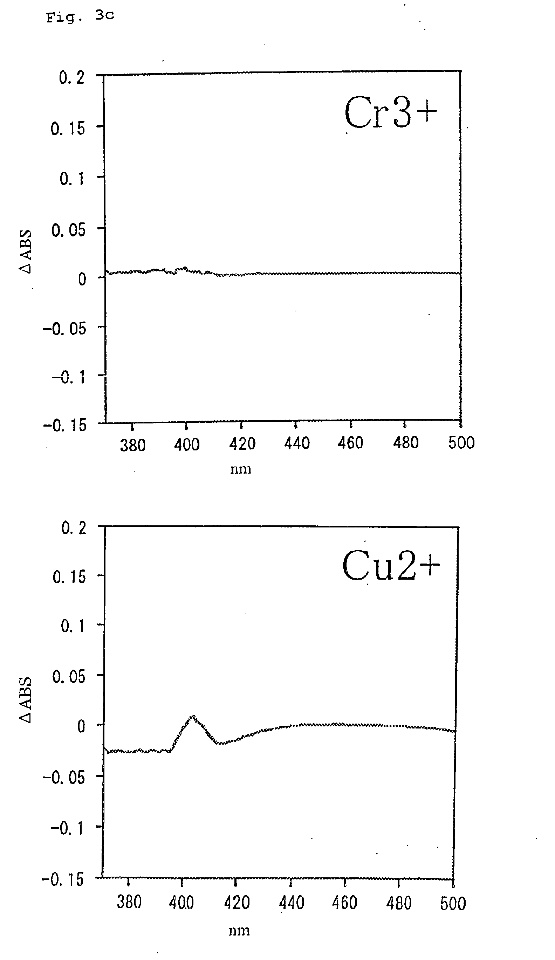

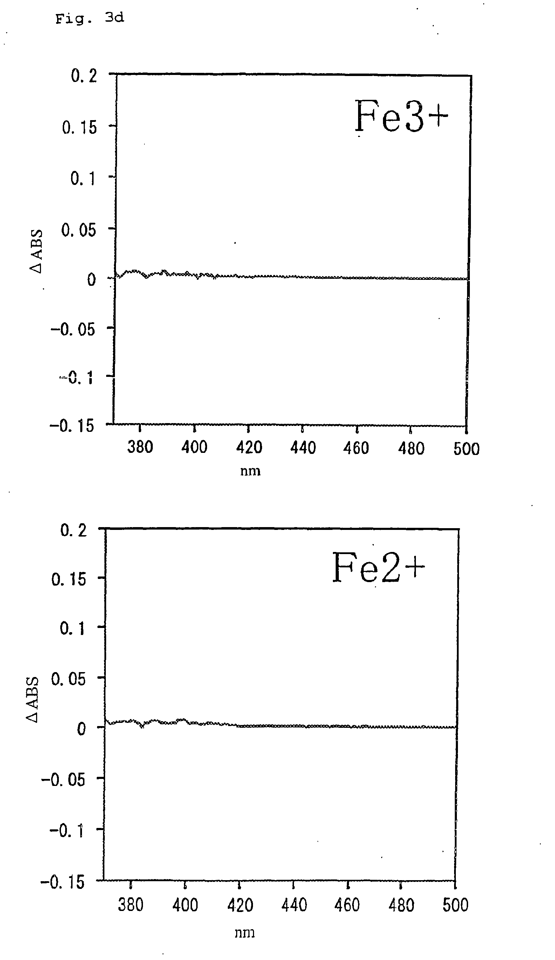

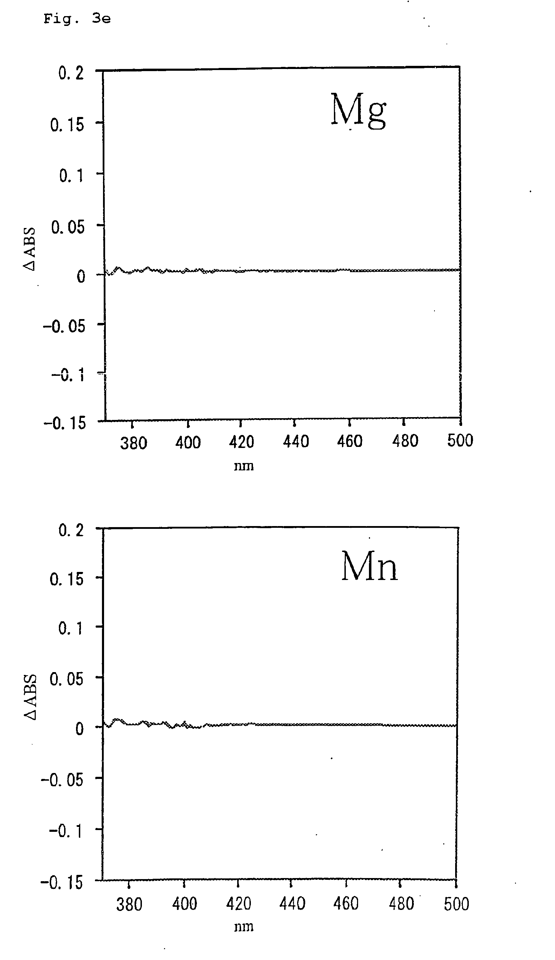

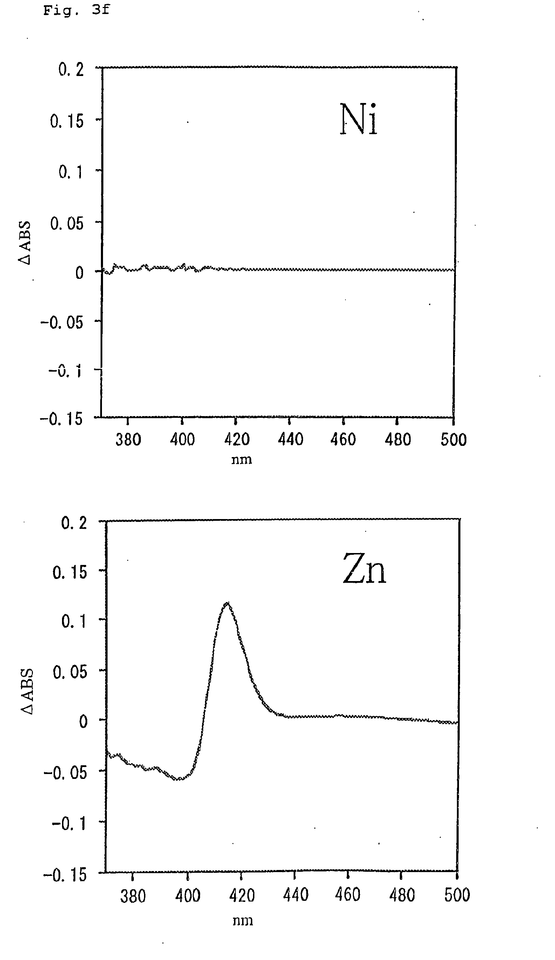

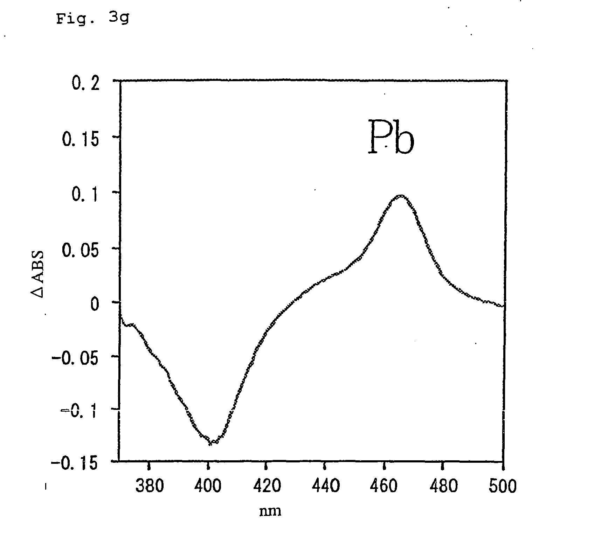

FIG. 3 a-g show a difference in the absorbance of a PPDE - acrylamide copolymer (PPDE-AAm) at pH 11. A large absorbance difference was caused by Cd²⁺, Zn²⁺ and Pb²⁺ and Cu²⁺ also caused a slight absorbance difference.

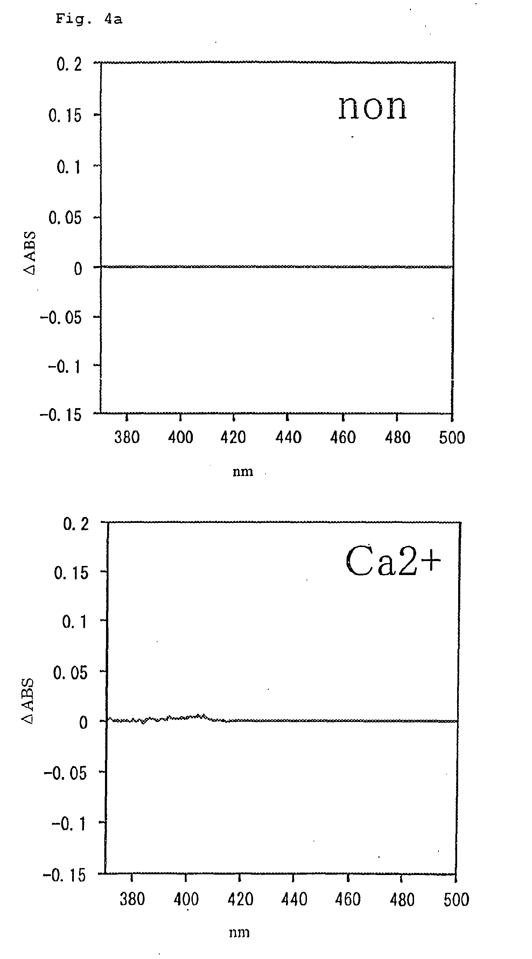

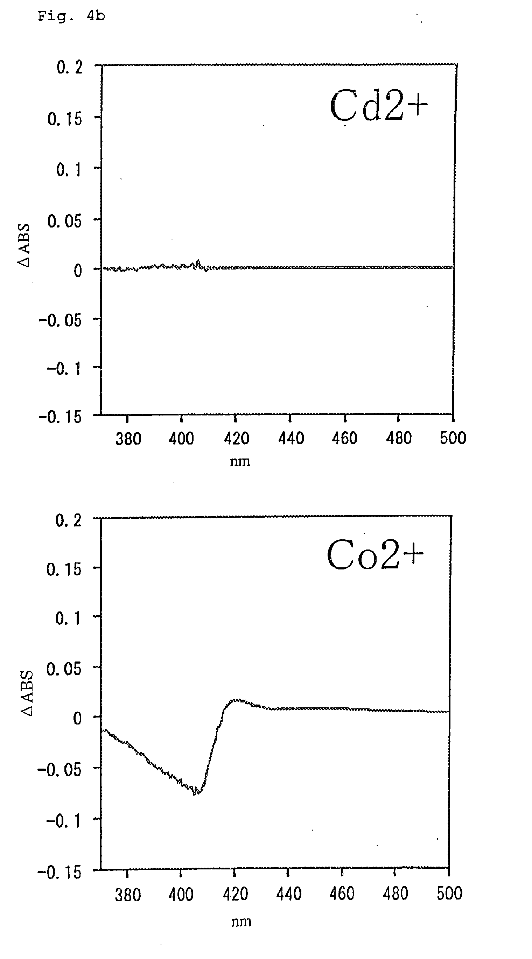

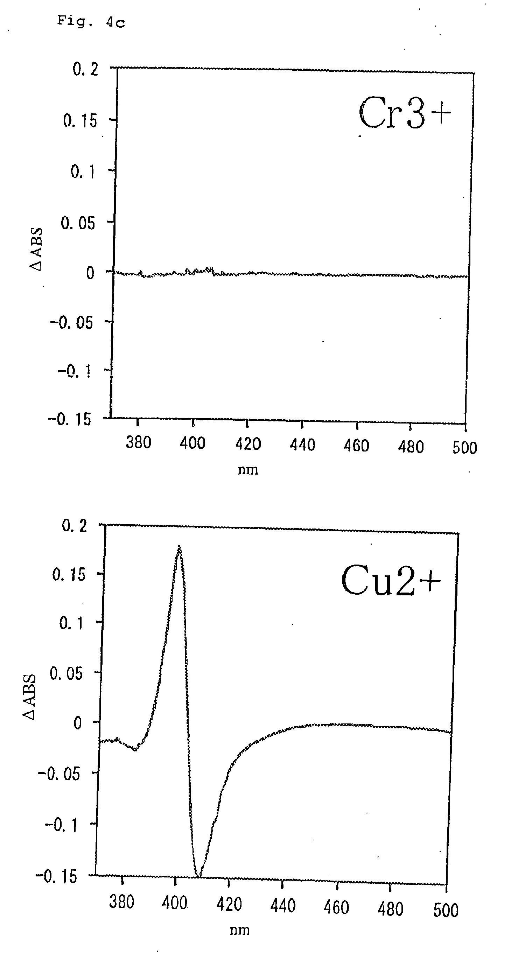

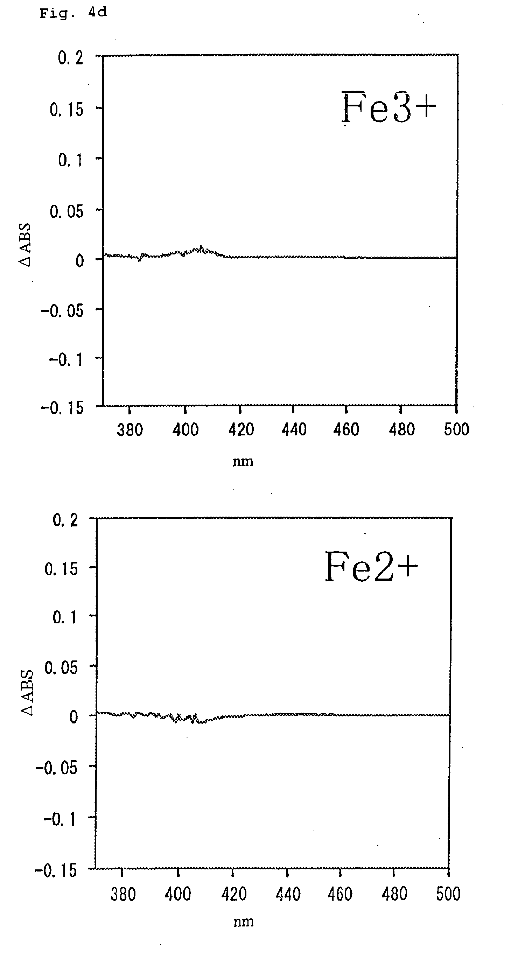

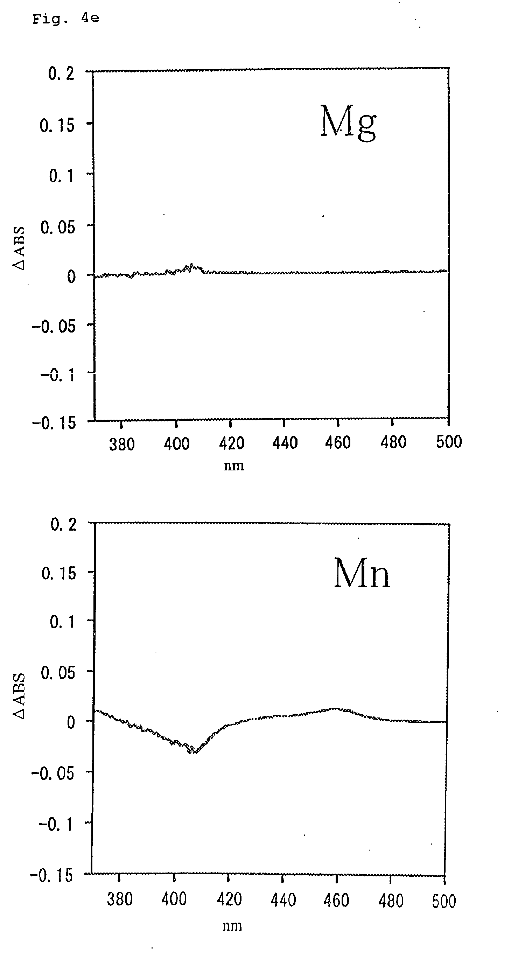

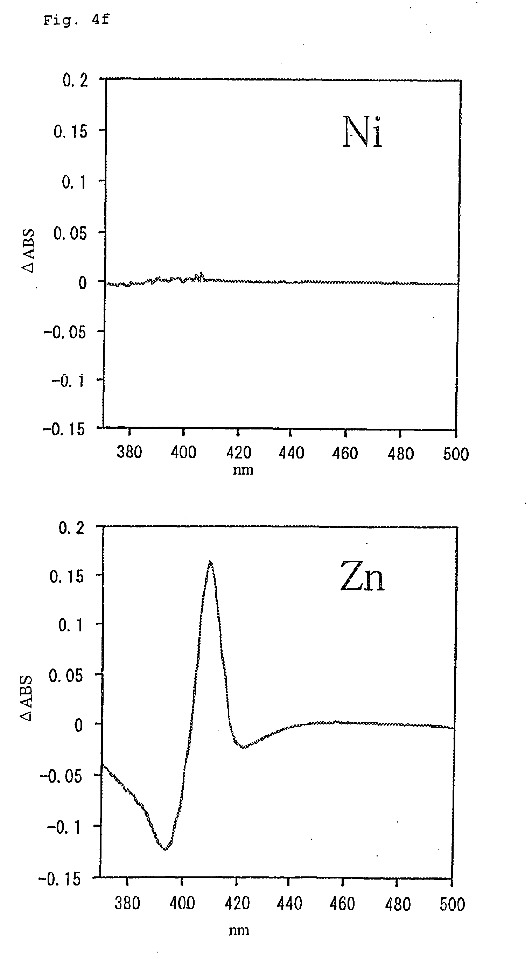

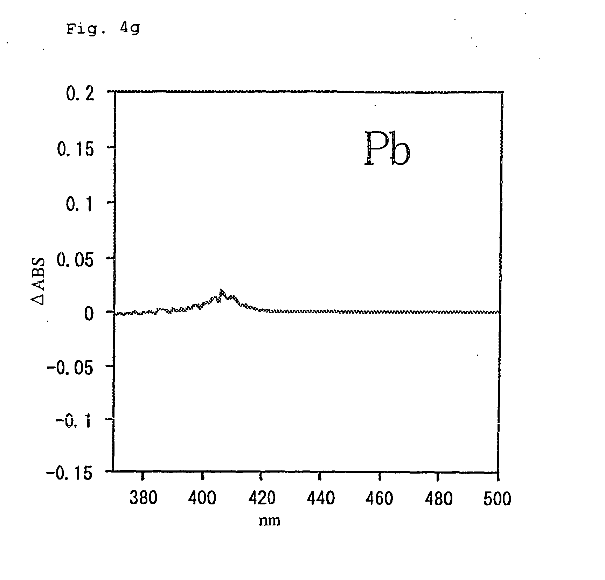

FIG. 4 a-g show a difference in the absorbance of a PPDE - methacrylic acid copolymer (PPDE-MAcid) at pH 11. As well as a large absorbance difference caused by Zn²⁺ and Cu²⁺, an absorbance difference by Co²⁺ and Mn²⁺ which did not occur in PPDE-AAm were observed.

ii) A change in the absorbance due to complex formation between each of all the porphyrin-nucleus introduced polymers synthesized above and a metal, and wavelength are shown in Tables 3 and 4. For comparison, the absorbance of a porphyrin compound itself was measured in a similar manner after dissolving it in DMSO when it was PPDE and in THF when it was TAPP, and then adjusting the pH of the resulting solution. The results are collectively shown in Tables 3 and 4 (the blank column of this table indicates that a peak of difference in absorbance was not observed).

**Table 3**

| Polymer | pH | Cd²⁺ | nm | Co²⁺ | nm | Cu²⁺ | nm | Fe²⁺ | nm | Mn²⁺ | nm | Zn²⁺ | nm | Pb²⁺ | nm |
|---|---|---|---|---|---|---|---|---|---|---|---|---|---|---|---|
| PPDE(not Polymer) | 5.5 | | | | | -0.1339 | 409 | | | | | 0.024 | 413 | | |
| PPDE-AAm | 5.5 | | | | | 0.0283 | 402 | | | | | 0.0956 | 413 | | |
| PPDE-MAcid | 5.5 | | | | | 0.14 | 399 | | | | | 0.0505 | 411 | | |
| PPDE-AAcid | 5.5 | | | | | 0.1473 | 400 | | | | | 0.026 | 410 | | |
| PPDE-1VImida | 5.5 | | | | | 0.0157 | 403 | -0.025 | 471 | | | 0.0054 | 418 | | |
| PPDE-4VPyr | 5.5 | | | | | 0.1866 | 400 | | | | | 0.0341 | 402 | | |
| PPDE-5HAcid | 5.5 | | | | | 0.0326 | 399 | | | | | 0.1439 | 413 | | |
| PPDE-3BAcid | 5.5 | | | | | 0.1245 | 397 | | | | | 0.2373 | 410 | | |
| PPDE-VAce | 5.5 | | | | | | | | | | | | | | |
| PPDE-AAmine | 5.5 | | | | | 0.0421 | 395 | | | | | 0.0304 | 407 | | |
| PPDE-Achlo | 5.5 | | | | | | | | | | | | | | |
| PPDE-AAl | 5.5 | | | | | 0.0576 | 396 | | | | | 0.0306 | 408 | | |
| PPDE-βMAl | 5.5 | | | | | 0.1432 | 397 | | | | | 0.0221 | 410 | | |
| PPDE-DMAAm | 5.5 | | | | | 0.0709 | 401 | | | | | 0.0182 | 414 | | |
| PPfacid-AAm | 5.5 | | | 0.0199 | 425 | 0.0234 | 401 | -0.1114 | 402 | | | 0.1919 | 412 | | |
| TAPP(not Polymer) | 5.5 | | | | | 0.0402 | 409 | | | | | | | | |
| TAPP-AAm | 5.5 | | | | | 0.0516 | 419 | | | | | 0.0178 | 430 | | |
| TAPP-Macid | 5.5 | | | | | 0.1663 | 419 | | | | | 0.0636 | 428 | | |
| TAPP-Aacid | 5.5 | | | | | 0.3197 | 419 | | | | | | | | |
| TAPP-DMAAm | 5.5 | | | | | 0.0408 | 418 | | | | | | | | |

**Table 4**

| Polymer | pH | Cd²⁺ | nm | Co²⁺ | nm | Cu²⁺ | nm | Fe²⁺ | nm | Mn²⁺ | nm | Zn²⁺ | nm | Pb²⁺ | nm |
|---|---|---|---|---|---|---|---|---|---|---|---|---|---|---|---|
| PPDE(not Polymer) | 11 | 0.0114 | 422 | | | 0.0456 | 399 | | | | | | | 0.0117 | 465 |
| PPDE-AAm | 11 | 0.1646 | 426 | | | -0.0188 | 415 | | | | | 0.1158 | 415 | 0.0973 | 465 |
| PPDE-MAcid | 11 | | | 0.015 | 420 | 0.1798 | 398 | | | 0.0126 | 459 | 0.1646 | 409 | | |
| PPDE-AAcid | 11 | | | | | 0.1323 | 399 | | | | | 0.0525 | 409 | | |
| PPDE-1Vimida | 11 | 0.0334 | 426 | | | | | | | | | 0.0191 | 420 | 0.0198 | 468 |
| PPDE-4VPyr | 11 | | | | | 0.0712 | 402 | | | | | | | | |
| PPDE-5HAcid | 11 | 0.1946 | 421 | 0.0126 | 422 | | | | | 0.0276 | 458 | 0.1722 | 410 | 0.0842 | 462 |
| PPDE-3BAcid | 11 | 0.1405 | 421 | | | 0.0703 | 397 | | | 0.0111 | 458 | 0.0245 | 410 | 0.0396 | 462 |
| PPDE-VAce | 11 | | | | | | | | | | | | | | |
| PPDE-AAmine | 11 | 0.0098 | 422 | | | | | | | | | | | 0.0093 | 461 |
| PPDE-AChlo | 11 | | | | | | | | | | | | | | |
| PPDE-AAl | 11 | 0.0071 | 420 | | | 0.0265 | 396 | | | | | | | 0.003 | 462 |
| PPDE-βMAl | 11 | | | | | 0.076 | 397 | | | | | 0.0316 | 398 | 0.0074 | 462 |
| PPDE-DMAAm | 11 | 0.0344 | 421 | | | 0.0394 | 400 | | | | | 0.0214 | 413 | 0.0398 | 464 |
| PPfacid-AAm | 11 | 0.1611 | 426 | | | 0.0217 | 404 | | | | | 0.1002 | 415 | 0.1129 | 465 |
| TAPP(not Polymer) | 11 | | | | | | | | | | | | | | |
| TAPP-AAm | 11 | 0.0944 | 442 | | | 0.0237 | 418 | | | | | 0.0534 | 436 | 0.0582 | 469 |
| TAPP-MAcid | 11 | 0.0738 | 435 | 0.0555 | 431 | 0.1339 | 411 | | | | | 0.2602 | 425 | | |
| TAPP-AAcid | 11 | | | 0.0578 | 430 | 0.3934 | 417 | | | 0.0179 | 471 | 0.3892 | 424 | | |
| TAPP-DMAAm | 11 | 0.0472 | 434 | | | 0.0359 | 419 | | | | | 0.0383 | 425 | 0.0371 | 470 |

The above-described results indicate that the kind of a metal with which the polymer reacted, difference in absorbance and absorption wavelength each differs depending on the kind of the porphyrin compound and the kind of the radically polymerizable monomer copolymerized therewith. They also indicate that by incorporation of a porphyrin nucleus in a polymer, the resulting compound forms a complex with a metal to which a porphyrin compound itself does not bond and some polymers cause a large difference in absorbance. Example 3 Measurement of the concentration of heavy metals by using a porphyrin-nucleus introduced polymer

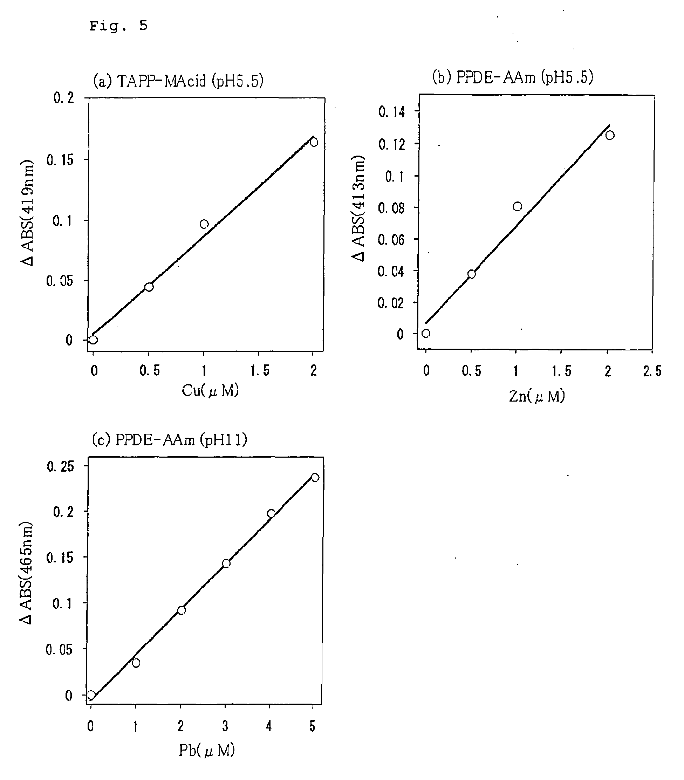

In FIG. 5, shown are reaction curves of TAPP-MAcid with Cu²⁺ at pH 5.5, PPDE-AAm with Zn²⁺ at pH 5.5 and PPDE-AAm with Pb²⁺ at pH 11. The polymers exhibited linear reactivity with any metal. The leachate from an ash depository of a waste incinerator was used as a sample and its absorbance was measured using the above-described polymers. A metal concentration was calculated by multiple regression analysis. The analytical results are shown in Table 5, together with the results measured by an atomic absorption spectrophotometer. The analytical results coincided with the results of atomic absorbance spectrophotometry. The multiple correlation coefficient r in regression analysis available from the standard sample used for the measurement of Cu²⁺ was 0.98937 (r² = 0.97885), while that available from the standard sample used for the measurement of Zn²⁺ was 0.97727 (r² = 0.95505)

**Table 5**

| Sample | Cu²⁺ | | Zn²⁺ | | Pb²⁺ | |
|---|---|---|---|---|---|---|
| | Polymer | Atomic absorption | Polymer | Atomic absorption | Polymer | Atomic absorption |
| Leachate from ash depository | 186.3 | 174.8 | 3021 | 4917 | 38.4 | 56.4 |
| Unit: µM "Polymer": absorption spectrophotometry using a porphyrin-introduced polymer "Atomic absorption": Atomic absorption spectrometry | | | | | | |

### Example 4 Synthesis of porphyrin neucleus-introduced gels

Used as a porphyrin compound were PPfacid and PPDE; as a radically polymerizable monomer, four monomers, that is, acrylamide (AAm), methacrylic acid (MAcid), acrylic acid (AAcid) and N,N-dimethylacrylamide (DMAAm); and as a crosslinking agent, N,N'-methylenebisacrylamide (MBAA).

In a vessel were charged 5 ml of a 0.6 mM porphyrin solution, an adequate amount of a radically polymerizable monomer, 2 ml of 200 mM N,N'-methylenebisacrylamide and 0.2 ml of 500 mM AIBN, followed by the addition of DMSO to give the total amount of 10 ml. In consideration of the maintenance of the gel form, the radically polymerizable monomer was added so that the concentration after filling would be 1.5 M.

The vessel having the polymer solution therein was immersed in cold water filled in an ultrasonic cleaner, followed by degassing for 30 minutes. Bubbling by a nitrogen gas was then conducted for 2 minutes. The polymer solution was poured in a space of 1 mm between glass plates. The resulting plates were placed in an incubator of 60 °C, whereby polymerization was initiated. After 21 hours, the gel sheet of 1 mm thick was removed from the glass plates and cut into a piece of 5 mm square. The resulting gel was washed well with pure water. In this manner, various porphyrin-nucleus introduced gels were prepared.

### Example 5 Measurement of reactivity with metal

### (1) Measuring method

To each of 5 ml a buffer solution containing 20 mM 2-(N-morpholino)ethanesulfonic acid (MES) and having a pH of 5.5 and 5 ml of a buffer solution containing 20 mM 3-cyclohexylamino-1-propanesulfonic acid (CAPS) and having a pH of 11, 50 µl of each of 500 µM aqueous solutions of metal salts shown in Table 2 was added. After the porphyrin-nucleus introduced gel sheet was immersed in the aqueous solution of a metal salt at 60 °C for 1 hour, the gel was takedn out and absorbance of it (at 370 to 500 nm) in the thickness direction was measured.

### (2) Results

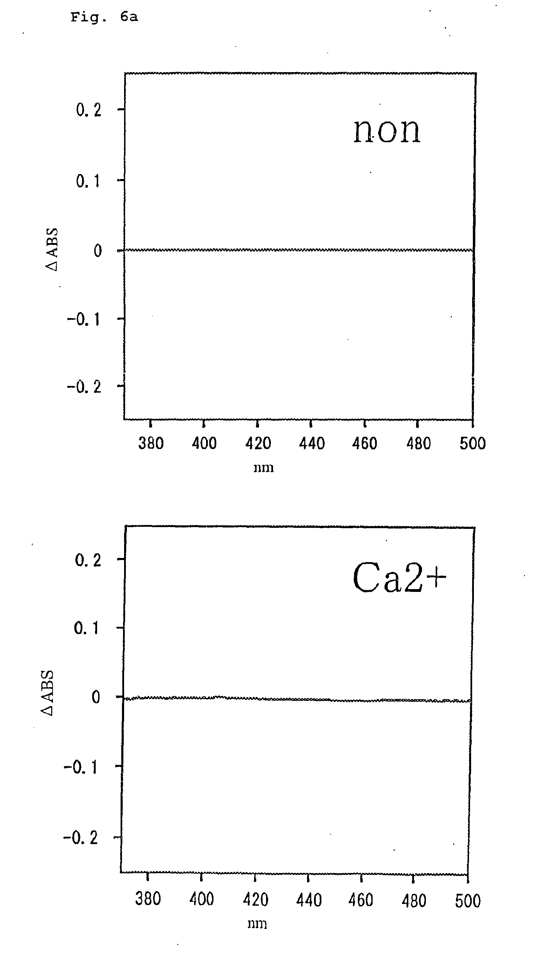

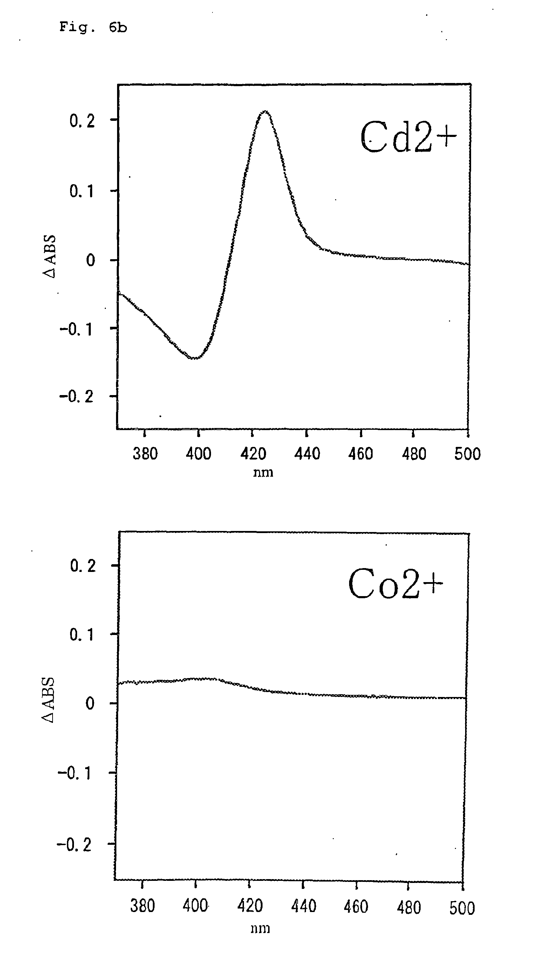

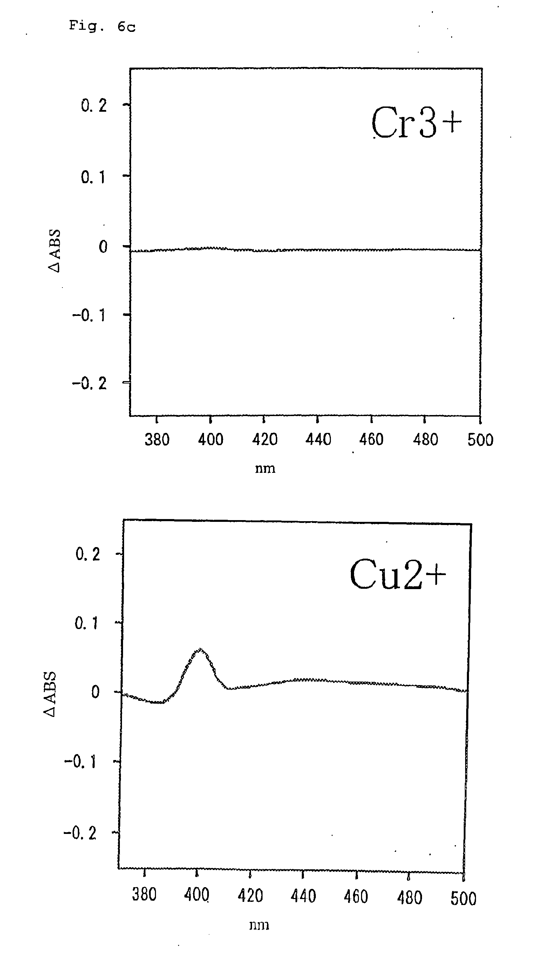

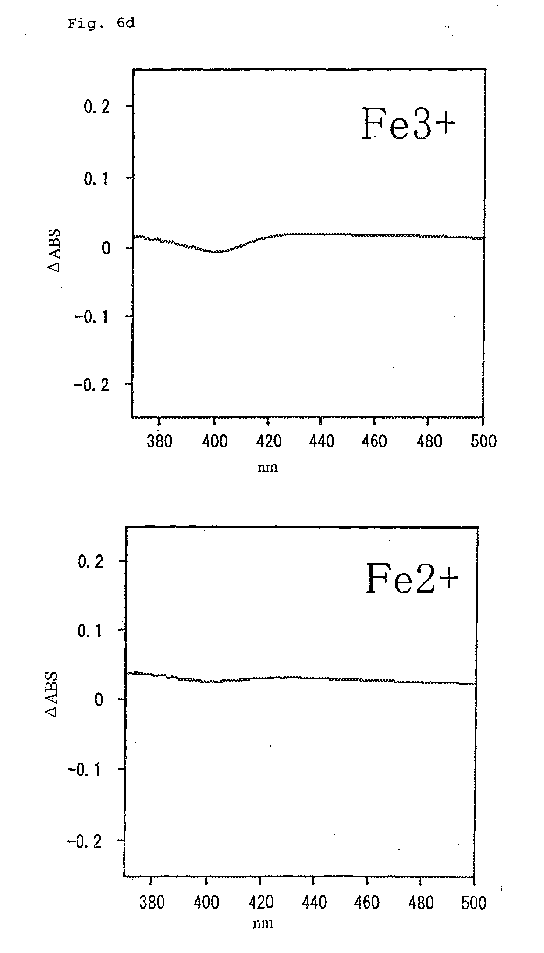

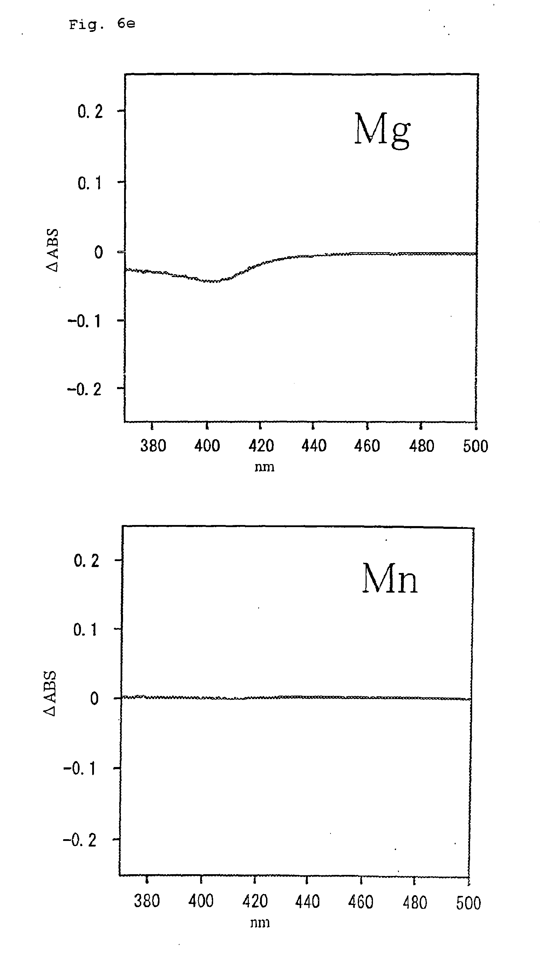

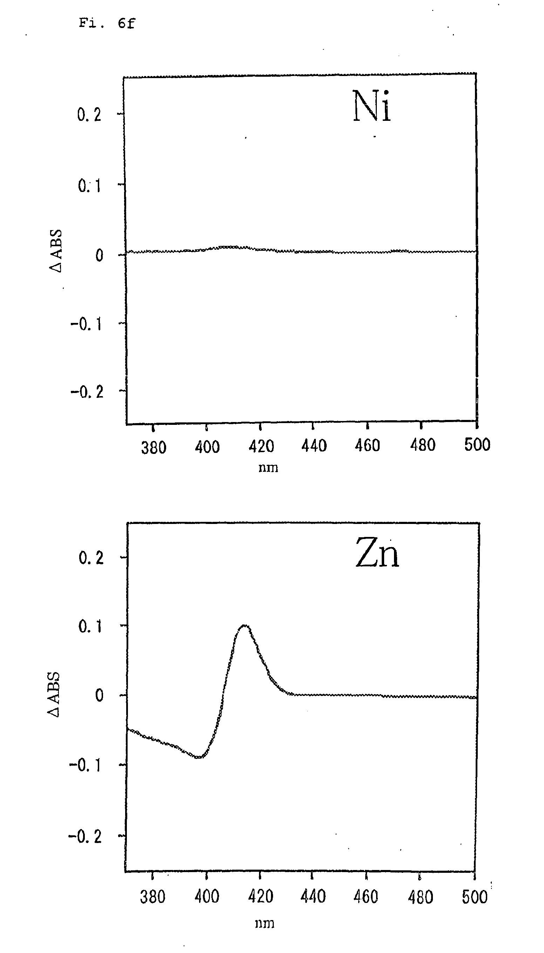

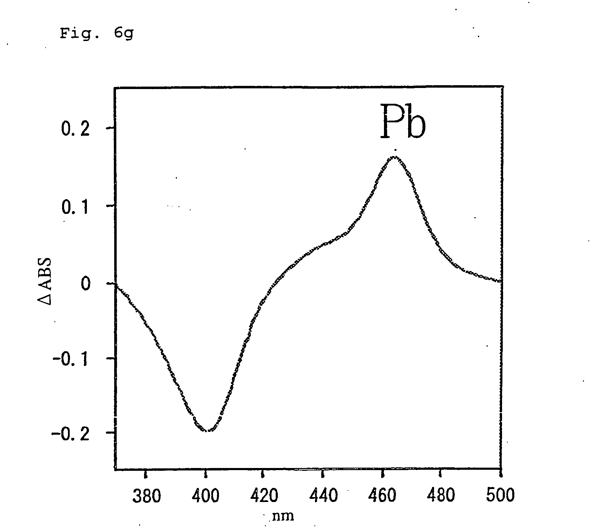

i) Differences in the absorbance caused by immersion of the copolymerized gel of PPDE, acrylamide and N,N' - methylenebisacrylamide in aqueous solutions of metal salts having a pH 11 are shown in FIG. 6 a-g. Metals causing a large absorbance difference were Cu²⁺, Zn²⁺, Cd²⁺ and Pb²⁺.
ii) A change in the absorbance due to complex formation between each of all the porphyrin-nucleus introduced gels synthesized above and a metal, and wavelength are shown in Table 6. For comparison, the absorbance of PPDE itself was measured in a similar manner after dissolving it in DMSO, and then adjusting the pH of the resulting solution. The results are collectively shown in Table 6 (the blank column of this table indicates that a peak of difference in absorbance was not observed).

**Table 6**

| Gel | pH | Cd²⁺ | nm | Cu²⁺ | nm | Zn²⁺ | nm | Pb²⁺ | nm |
|---|---|---|---|---|---|---|---|---|---|
| PPDE(not Gel)-MBAA | 5.5 | | | -0.0627 | 399 | 0.024 | 413 | | |
| PPDE-AAm-MBAA | 5.5 | | | 0.0611 | 399 | 0.0616 | 412 | | |
| PPDE-MAcid-MBAA | 5.5 | | | 0.2231 | 398 | -0.0277 | 415 | | |
| PPDE-AAcid-MBAA | 5.5 | | | 0.0512 | 399 | 0.0148 | 410 | | |
| PPDE-DMAAm-MBAA | 5.5 | | | 0.0326 | 399 | | | | |
| PPfacid-AAm-MBAA | 5.5 | | | 0.0345 | 399 | 0.0824 | 411 | | |
| PPDE(not Gel) | 11 | 0.0114 | 422 | 0.0456 | 399 | | | 0.0117 | 465 |
| PPDE-AAm-MBAA | 11 | 0.2126 | 424 | 0.0629 | 400 | 0.0993 | 413 | 0.1614 | 484 |
| PPDE-MAcid-MBAA | 11 | | | -0.0237 | 395 | | | | |
| PPDE-AAcid-MBAA | 11 | | | -0.0243 | 398 | | | | |
| PPDE-DMAAm-MBAA | 11 | 0.0346 | 423 | 0.0276 | 399 | | | 0.0364 | 464 |
| PPfacid-AAm-MBAA | 11 | 0.1158 c | 423 | 0.042 | 400 | 0.0687 | 413 | 0.1105 | 464 |

### INDUSTRIAL APPLICABILITY

According to the method of measuring a trace metal of the present invention, by selecting a radically polymerizable monomer which is a raw material of porphyrine-introduced polymer as a reagent, water-solubility of the reagent and reactivity with a metal in complex formation can be changed, and species of the target metal can be measured highly sensitively and easily.

## Claims

1. Upon radical copolymerization of a vinyl-containing porphyrin compound and a radically polymerizable monomer, a method of controlling reactivity of the porphyrin-nucleus introduced polymer with a metal by selecting the radically polymerizable monomer.

2. The method according to claim 1, wherein the vinyl-containing porphyrin compound is selected from the group consisting of the following compounds (1) to (5): 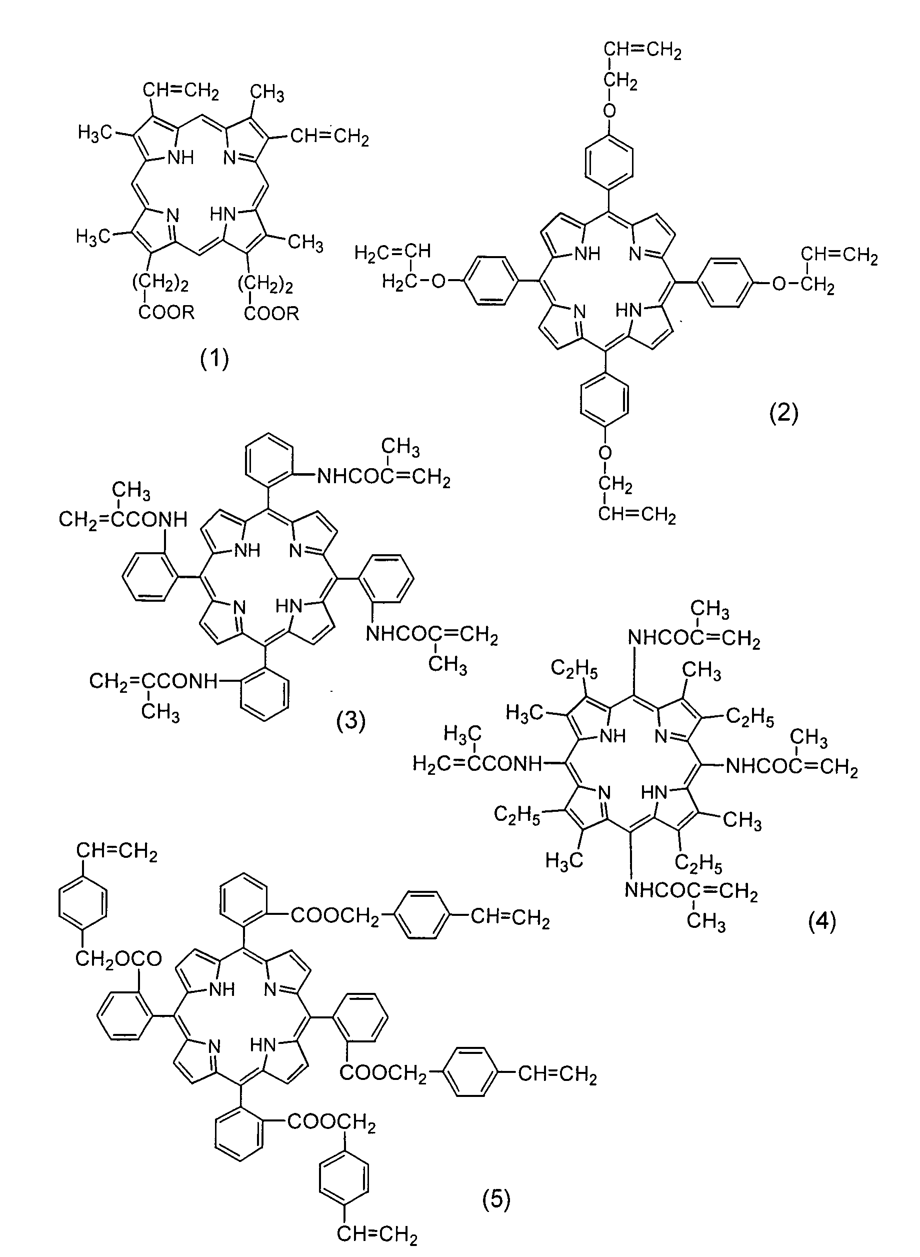 wherein R is a hydrogen atom or a C₁₋₆ alkyl group.

3. The method of claim 1, wherein the radically polymerizable monomer is compound represented by formula (6): 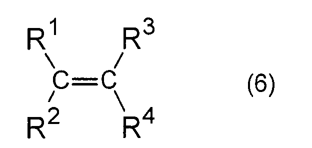 wherein R¹, R², R³ and R⁴ each independently represents a hydrogen atom, a C₁₋₅ alkyl group, -(CH²)ₙCOOR⁵, -(CH₂)ₙOCOR⁵, - (CH₂)ₙN(R⁵) (R⁶), -(CH₂)ₙCON (R⁵) (R⁶), -(CH₂)ₙA (in which R⁵ and R⁶ each represent a hydrogen atom, a C₁₋₅ alkyl group, a carboxymethyl group, or a phenyl or phenylalkyl group which may have a substituent, A represents a halogen atom, a hydroxy group, a formyl group, a cyano group or a carbonyl halide group, and n stands for an integer of 0 to 6), or an imidazolyl, pyridyl or phenyl group which may have a substituent.

4. The method of claim 3, wherein the radically polymerizable monomer is a compound serving as a cross-linking agent, and having two or more polymerizable carbon-carbon double bonds.

5. A method for measuring a trace metal by measuring a change in absorbance caused by complex forming reaction between a porphyrin-nucleus introduced polymer, which has been obtained by radical copolymerization of a vinyl-containing porphyrin compound and a radically polymerizable monomer, and a heavy metal ion, said radically polymerizable monomer being selected so as to heighten reaction selectivity of the porphyrin-nucleus introduced polymer to a metal to be measured.

6. The method according to claim 5, wherein the vinyl-containing porphyrin compound is selected from the group consisting of the following compounds (1)-(5): 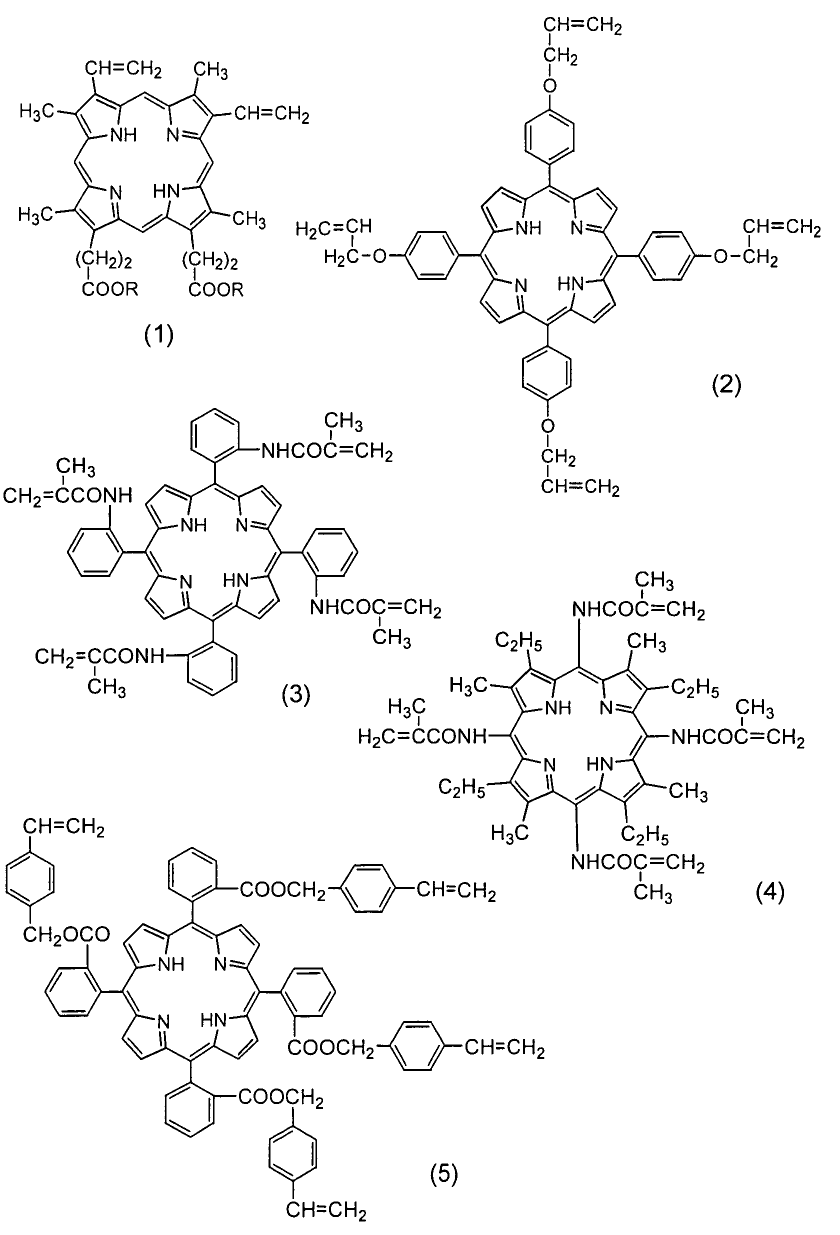 wherein R is a hydrogen atom or a C₁₋₆ alkyl group.

7. The method of claim 5, wherein the radically polymerizable monomer is compound represented by formula (6): 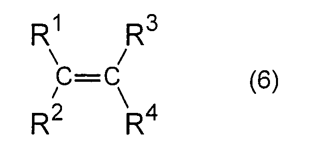 wherein R¹, R², R³ and R⁴ each independently represents a hydrogen atom, a C₁₋₅ alkyl group, -(CH₂)ₙCOOR⁵, -(CH₂)ₙOCOR⁵, - (CH₂)ₙN(R⁵) (R⁶), -(CH₂)ₙCON(R⁵) (R⁶), -(CH₂)ₙA (in which R⁵ and R⁶ each represents a hydrogen atom, a C₁₋₅ alkyl group, a carboxymethyl group, or a phenyl or phenylalkyl group which may have a substituent, A represents a halogen atom, a hydroxy group, a formyl group, a cyano group or a carbonyl halide group, and n stands for an integer of 0 to 6), or an imidazolyl, pyridyl, or phenyl group which may have a substituent.

8. The method according to claim 7, wherein the radically polymerizable monomer is a compound serving as a cross-linking agent, and having two or more polymerizable carbon-carbon double bonds.

9. The method according to any one of claims 5-8, wherein plural trace metals are measured simultaneously by using plural porphyrin-nucleus introduced polymers in combination.
